# EUROPEAN PATENT APPLICATION

(11) **EP 4 779 765 A1**
(43) Date of publication of application: **22.07.2026**
(21) Application number: 24901760.9
(22) Date of filing: 31.10.2024
(51) Int. Cl.: H01M 50/105, H01M 50/133, H01M 50/131, H01M 50/531

(54) **ALL-SOLID-STATE BATTERY**

(30) Priority: 31.07.2024 CN 202421848597 U
(71) Applicant: Eve Energy Co., Ltd., Huizhou, Guangdong 516006 (CN)
(72) Inventor: CHEN, Guiwei, Guangdong 516006 (CN); ZHANG, Dianzheng, Guangdong 516006 (CN); JI, Yajuan, Guangdong 516006 (CN); ZHAO, Ruirui, Guangdong 516006 (CN)
(74) Representative: Herrero & Asociados, S.L.
(86) International application number: PCT/CN2024/128906
(87) International publication number: WO 2026/025685

(57) **Abstract**

The present disclosure relates to the technical field of batteries, and in particular to an all-solid-state battery. The all-solid-state battery includes a package, a cell assembly, a total positive electrode, and a total negative electrode. The package is sealedly wrapped around an outside of the cell assembly. The total positive electrode and the total negative electrode are connected to a peripheral side of the package and electrically connected to the cell assembly. A tiling area of the package is A, a thickness of the package is B mm, and C = A/B, where 5000 mm≤C≤20000 mm. The aforementioned all-solid-state battery has a better uniformity thoroughly by increasing the tiling area of the package and reducing the thickness of the package.

## Description

The present application claims priority of Chinese Patent Application No. 202421848597.0, filed on July 31, 2024, in the China National Intellectual Property Administration, the entire contents of which are hereby incorporated by reference in its entirety.

### TECHNICAL FIELD

The present disclosure relates to the technical field of batteries, and in particular to an all-solid-state battery

### BACKGROUND

The uniformity of molding process and operational pressure uniformity exerts profound influence on the performance of all-solid-state batteries. To achieve uniform pressure distribution, current all-solid-state battery configurations typically adopt multilayer laminated soft packaging structures.

### TECHNICAL PROBLEM

However, constrained by the precision of manufacturing processes, each laminated layer often exhibits non-uniformity in thickness within its own plane, which sharply increases overall non-uniformity with the stacking of multiple layers. During fabrication, pressure distribution irregularities frequently occur, and even the implementation of isostatic pressing techniques may lead to battery warping or fracture. Testing and operational phases also face challenges related to pressure uniformity and transmission; the pressure at the battery's core often differs from that at the surface, resulting in spatially heterogeneous pressure fields. Over time, regions subjected to higher pressure experience progressive performance degradation and eventual failure.

### SUMMARY OF THE DISCLOSURE

### TECHNICAL SOLUTION

The present disclosure relates to the technical field of batteries, and in particular to an all-solid-state battery. The all-solid-state battery includes a package, a cell assembly, a total positive electrode, and a total negative electrode. The package is sealedly wrapped around an outside of the cell assembly. The total positive electrode and the total negative electrode are connected to a peripheral side of the package and electrically connected to the cell assembly. A tiling area of the package is A, a thickness of the package is B mm, and C = A/B, where 5000 mm≤C≤20000 mm.

### BENEFICIAL EFFECT

By increasing the tiling area of the package and reducing the thickness of the package, when the area of the all-solid-state battery on A tiled plane is larger, the unevenness between layers of the all-solid-state battery is weakened more obviously. In addition, the thickness of the all-solid-state battery is made less, and in the thickness direction, the uneven accumulation of thickness is less, thereby making the uniformity of the entire all-solid-state battery better, and thus ensuring that the pressure transfer from the inside to the surface of the all-solid-state battery is smoother, which may balance the pressure inside and on the surface of the all-solid-state battery, and avoid the electrical performance of the all-solid-state battery at locations with higher pressure from degrading faster after a period of use, such that the service life of the all-solid-state battery may be extended.

### BRIEF DESCRIPTION OF THE DRAWINGS

FIG. 1 is a structural schematic view of an all-solid-state battery according to some embodiments of the present disclosure.
FIG. 2 is an internal structural view of an all-solid-state battery according to some embodiments of the present disclosure.
FIG. 3 is a structural schematic view of a cell according to some embodiments of the present disclosure.

### Reference numerals:

10, package; 11, side seal region;
20, cell assembly; 21, cell; 211, positive electrode assembly; 2111, positive electrode sheet; 2112, positive electrode coating; 212, electrolyte layer;
213, negative electrode assembly; 2131, negative electrode sheet; 2132, negative electrode coating; 2133, insulation layer;
22, heat dissipation layer; 23, positive electrode; 24, negative electrode;
30, total positive electrode; 40, total negative electrode.

### DETAILED DESCRIPTION

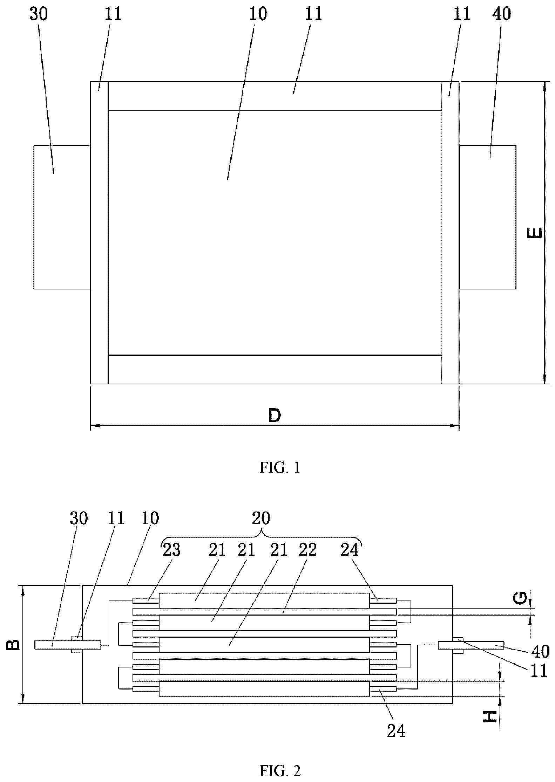

The present disclosure provides an all-solid-state battery with better pressure uniformity inside and on the surface. As shown in FIGS. 1 and 2, the all-solid-state battery includes a package 10, a cell assembly 20, a total positive electrode 30, and a total negative electrode 40; the package 10 is sealedly wrapped around an outside of the cell assembly 20; the total positive electrode 30 and the total negative electrode 40 are connected to a peripheral side of the package 10 and electrically connected to the cell assembly 20; a tiling area of the package 10 is A, a thickness of the package 10 is B mm, and C = A/B, where 5000 mm≤C≤20000 mm. The all-solid-state battery is designed by increasing the tiling area of the package 10 and reducing the thickness of the package 10. When the area of the all-solid-state battery on a tiled plane is larger, the unevenness between layers of the all-solid-state battery is weakened more significantly. In addition, the thickness of the all-solid-state battery is made less, and in the thickness direction, the uneven accumulation of thickness is less, thereby making the uniformity of the entire all-solid-state battery better, and thus ensuring that the pressure transfer from the inside to the surface of the all-solid-state battery is smoother, which may balance the pressure inside and on the surface of the all-solid-state battery, and avoid the electrical performance of the all-solid-state battery at locations with higher pressure from degrading faster after a period of use, such that the service life of the all-solid-state battery may be extended.

It should be noted that in some embodiments, the all-solid-state battery may be mounted on a chassis of a vehicle, which has a large flat installation space, for providing electric power to the vehicle. In other embodiments, the all-solid-state battery may be mounted according to actual usage conditions, which are not limited herein.

If C<5000mm, the pressure balance is less effective. If C>20000mm, e.g., the thickness of the package 10 is made too thin, the strength of the entire all-solid-state battery may be influenced. Therefore, the range of C is set to 5,000mm≤C≤20,000mm. For example, C may take on values of 5,100mm, 5,200mm, 5,500mm, 5,700mm, 6,000mm, 6,500mm, 7,000mm, 7,500mm, 8,000mm, 8,500mm, 9,000mm, 9,500mm, 10,000mm, 11,000mm, 12,000mm, 13,000mm, 14,000mm, 15,000mm, 16,000mm, 17,000mm, 18,000mm, 19,000mm, etc.

In some embodiments, 750,000mm²≤A≤2,000,000mm² and 100mm≤B≤150mm. This makes the area of the all-solid-state battery suitable for most usage scenarios, and the thickness of the solid-state battery is not too thick to occupy the usage space in the height direction. For example, A may take on values such as 760,000mm², 770,000mm², 780,000mm², 790,000mm², 800,000mm², 900,000mm², 120,000mm², 1,400,000mm², 1,600,000mm², 1,800,000mm², etc., B may take on values such as 1,110mm, 120mm, 130mm, and 140mm. In some embodiments, 100mm≤B≤125mm. Appropriately reducing the thickness of the package 10 may effectively increase the uniformity of pressure transfer and maintain the pressure of the cell assembly 20 in the thickness direction to be consistent.

In some embodiments, as shown in FIG. 1, the length of the package 10 is defined as D, the width of the package 10 is defined as E, F=D/E, and 1.5≤F≤4. With this aspect ratio, the moment distribution of the all-solid-state battery after being stressed is more even, thereby avoiding damage due to excessive moment at some regions. For example, E may take on values of 2.2, 2.5, 2.8, 3, 3.2, 3.4, etc. In some embodiments, 2.5≤F≤3.5, which may better ensure the uniformity of the moment distribution of the all-solid-state battery after being stressed.

In some embodiments, 1,500mm≤D≤2,000mm, 500mm≤E≤1000mm. The dimensions may better adapt to most usage scenarios. For example, D may take on values such as 1,600mm, 1,700mm, 1,800mm, 1,900mm, etc., and E may take on values such as 600mm, 700mm, 800mm, 900mm, etc.

In the relevant art, some embodiments of the present disclosure, as shown in FIG. 2, the cell assembly 20 includes N cells 21 arranged in a laminated configuration, where 5≤N≤20. For example, N may take on values of 6, 7, 8, 9, 10, 11, 12, 13, 14, 15, 16, 17, 18, 19. By appropriately reducing the number of cells 21, the thickness of the package 10 can be reduced accordingly. As the number of laminations increases, the effect of uniform force transmission within the cell assembly 20 decreases, and the intermediate region bears uneven force. The uniform transmission of force may basically be maintained for layers with their number below 20. In some embodiments, 5≤N≤10 to ensure the best effect of force transmission.

In some embodiments, as shown in FIG. 2, the all-solid-state battery further includes a total positive electrode 30 and a total negative electrode 40 that extend from peripheral sides of the package 10, and the N cells 21 are arranged in series. A positive electrode 23 of one of the cells 21 is connected to the total positive electrode 30. A negative electrode 24 of one of the cells 21 is connected to the total negative electrode 40. By connecting the N cells 21 in series, the resulting all-solid-state battery can have a voltage that meets the requirements of application, thereby increasing the energy density of the all-solid-state battery and optimizing the battery to meet the requirements of devices. In addition, compared with an assembly structure of the same capacity formed by connecting cells 21 in parallel in the related art, the use of battery wires in the all-solid-state battery in the present embodiments allows a more compact structure and reduces costs when using a battery of the same capacity.

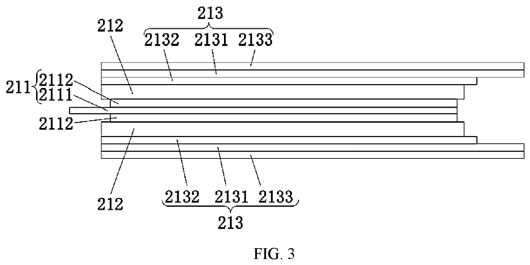

In some embodiments, as shown in FIG. 3, the cell 21 includes a positive electrode assembly 211, a negative electrode assembly 213, and an electrolyte layer 212; the negative electrode assembly 213 is disposed on each of both sides of the positive electrode assembly 211, and the electrolyte layer 212 is disposed between the positive electrode assembly 211 and the negative electrode assembly 213. With the above arrangement, compared to a scheme in the related art, in which the positive electrode assembly 211 and the negative electrode assembly 213 in the cell 21 are arranged in one-to-one correspondence, the exchange rate of the active material between the positive electrode assembly 211 and the negative electrode assembly 213 is higher, such that the amount of electricity that a single cell 21 can provide is greater, and the arrangement of one set of positive electrode assemblies 211 can be omitted.

In some embodiments, the positive electrode assembly 211 includes a positive electrode sheet 2111 and a positive electrode coating 2112; the positive electrode coating 2112 is coated on each of both sides of the positive electrode sheet 2111, and the electrolyte layer 212 is correspondingly superimposed on a side of the positive electrode coating 2112 away from the positive electrode sheet 2111. It should be noted that the positive electrode sheet 2111 is also called a positive current collector. In FIG. 2, the positive electrode 23 of the cell 21 can be formed by extending the positive electrode sheet 2111 or welded to the outside of the positive electrode sheet 2111. This allows the positive electrode 23 of the cell 21 to be made of a suitable thickness to ensure sufficient strength. The active material of the positive electrode 23 is mainly present in the positive electrode coating 2112, and ion exchange is carried out with the negative electrode assembly 213.

In some embodiments, as shown in FIG. 3, the negative electrode assembly 213 includes a negative electrode coating 2132, a negative electrode sheet 2131, and an insulation layer 2133, and the negative electrode coating 2132, the negative electrode coating 2132 and the insulation layer 2133 are successively stacked on a side of the electrolyte layer 212 away from the positive electrode coating 2112. With this arrangement, the insulation layer 2133 can insulate the negative electrode 2131 of an adjacent cell 21, and the insulation layer 2133 can further provide better support, thereby improving the structural strength of the surface of each cell 21, as well as compression resistance and bending resistance, under the premise of multi-layer stacking. The active material of the negative electrode 24 is mainly contained in the negative electrode coating 2132, which carries out ion exchange with the positive electrode assembly 211. It should be noted that the negative electrode sheet 2131 is also called a negative current collector. The negative electrode 24 of the cell 21 can be formed by extending the negative electrode sheet 2131 (the two negative electrode sheets 2131 are welded together after extension), or welded to the outside of the negative electrode sheet 2131. This allows the negative electrode 24 of suitable thickness to be selected for the cell 21 to ensure that the negative electrode 24 is strong enough.

For all-solid-state batteries, their internal resistance is higher than that of liquid batteries, resulting in a serious temperature rise effect during fast charging and discharging, which is not conducive to stable battery operation. Conventionally, a suitable heat dissipation layer 22 and a thermal insulation layer are provided in the battery to control the temperature, but the layers are far away from the interior of the cell assembly 20, and the heat conduction effect is poor, making it difficult to meet the requirements.

As shown in FIG. 2, a heat dissipation layer 22 is arranged between each adjacent two cells 21. By providing the heat dissipation layer 22 inside the cell assembly 20, heat can be more quickly transferred from the interior of the cell assembly 20 to the surface, thereby maintaining the temperature uniformity of the cell assembly 20. Compared with traditional laminated or wound batteries, the heat dissipation effect is better in the present embodiments. In addition, the solid electrolyte does not have fluidity, which avoids the risk of corrosion of the heat dissipation layer 22.

In some embodiments, the heat dissipation layer 22 is a graphene aerogel layer, which can even out stress, and the transfer of internal forces in the cell assembly 20 is more controllable and consistent, which helps to improve the cycle stability of the cell assembly 20.

In some embodiments, as shown in FIG. 2, a thickness of the heat dissipation layer 22 is G, 0.5mm≤G≤5mm. If G>5mm, the overall thickness of the cell assembly 20 is significantly increased, which is not conducive to reducing the thickness of the cell assembly 20. If G<0.5mm, the effect of heat dissipation and uniform stress is not optimal. Therefore, the range of G is set to 0.5mm≤G≤5mm. For example, G may be set to 1mm, 1.5mm, 2mm, 2.5mm, 3mm, 3.5mm, 4mm, 4.5mm, etc. In some embodiments, 1mm≤G≤3mm. In some embodiments, G=1.2mm. If the heat dissipation layer 22 is too thin, it cannot withstand the volume expansion change during the working process of the cell assembly 20, and it is difficult to transmit force evenly. While if the heat dissipation layer 22 is too thick, it will cause serious deformation of the aerogel during the battery pressurization process, which will affect the internal structure of the battery.

In some embodiments, as shown in FIG. 1, four flat side seal regions 11 are formed by sealing around the package 10, and the total positive electrode 30 and the total negative electrode 40 extend from two opposite side seal regions 11 respectively. The above-mentioned arrangement enables the package 10 to seal the outside of the cell assembly 20, to prevent internal moisture or other substances from affecting the performance of the cell assembly 20, or from reacting with the material of the cell 21 to produce toxic gases.

In some embodiments, an outer surface of the package 10 is wrapped with an aluminum-plastic film, which may better serve as a seal to prevent the entry of external gases or liquids. In addition, since the core component wrapped inside the aluminum-plastic film is solid, it is less likely to move around than a soft-packed battery. In other words, the core component and the aluminum-plastic film can support the entire shape of the all-solid-state battery, reducing wear on the surface of the aluminum-plastic film and ensuring that the battery's endurance will not decrease due to wear on the aluminum-plastic film.

In some embodiments, the shape of the cell assembly may be cylindrical, cubic, or polyhedral, etc. That is, the cell assembly is formed by stacking layers, rather than winding.

In some embodiments, the solid-state battery provided by the present embodiments may be applied to a vehicle. Specifically, the vehicle may include commercial vehicles, special vehicles, electric bicycles, electric motorcycles, electric scooters, etc., which require the use of solid-state batteries to provide power to drive them.

For example, the measured data for different specifications of all-solid-state batteries is shown in Table 1.

**Table 1**

| Item | Ex. 1 | Cp. 1 | Ex. 2 | Cp. 2 | Ex. 3 | Cp. 3 | Ex. 4 | Cp. 4 | Ex. 5 | Cp. 5 |
|---|---|---|---|---|---|---|---|---|---|---|
| Tiling area A | 1,500, 000 | 1,500, 000 | 1,661, 750 | 1,661 ,750 | 1,267, 500 | 1,267, 500 | 1,028, 500 | 1,028, 500 | 1,000, 000 | 1,000, 000 |
| Thickness B | 100 | 160 | 110 | 170 | 120 | 180 | 130 | 190 | 150 | 200 |
| C=A/B | 20,000 | 20,000 | 15,000 | 15,000 | 10,000 | 10,000 | 8,000 | 8,000 | 5,000 | 5,000 |
| Package length D | 1,500 | 1,500 | 1,955 | 1,955 | 1,950 | 1,950 | 1,870 | 1,870 | 2,000 | 2,000 |
| Package width E | 1,000 | 1,000 | 850 | 850 | 650 | 650 | 550 | 550 | 500 | 500 |
| F=D/E | 1.5 | 1.5 | 2.3 | 2.3 | 3 | 3 | 3.4 | 3.4 | 4 | 4 |
| Number of cells N | 5 | 5 | 7 | 7 | 10 | 10 | 13 | 13 | 20 | 20 |
| Thickness of heat dissipation layer G | 0.5 | 0.5 | 1 | 1 | 2 | 2 | 3 | 3 | 5 | 5 |
| Capacity of single cell (Ah) | 101.8 | 101.8 | 112.9 | 112.9 | 86.2 | 86.2 | 69.7 | 69.7 | 67.6 | 67.6 |
| Power of single cell (wh) | 351.2 | 351.2 | 389.5 | 389.5 | 297.4 | 297.4 | 240.5 | 240.5 | 233.2 | 233.2 |
| Mass of single cell (Kg) | 1.028 | 1.028 | 1.126 | 1.126 | 0.863 | 0.863 | 0.704 | 0.704 | 0.683 | 0.683 |
| Energy density (Wh/Kg) | 341.6 | 324.6 | 345.9 | 318.2 | 344.6 | 292.9 | 341.6 | 300.6 | 341.5 | 324.4 |
| Proportion of pressure uniformity region | 91.28 | 90.12 | 90.33 | 88.43 | 97.43 | 94.23 | 95.89 | 93.77 | 90.11 | 87.65 |

In the table, the higher the data value for the proportion of the pressure uniformity region, the better the pressure uniformity of the surface of the solid-state battery.

For the first set of data, in Example 1, the tiling area is 1,500,000 mm², the thickness is 100 mm, the C value is 20,000, the package length is 1,500 mm, the package width is 1,000 mm, F value is 1.5, the number of cells is 5, the thickness of the heat dissipation layer is 0.5mm, and the above parameters are all within the parameter range given in the above embodiments. The capacity of a single cell is 101.8Ah, the power of a single cell is 351.2Wh, the mass of a single cell is 1.028Kg, the energy density of the cell is 341.6Wh/Kg, and the proportion of the pressure uniformity region is 91.28%. In Comparative Example 1, the thickness is 160mm, which is not within the range of parameters given in the embodiments; the energy density is 324.6Wh/Kg; other parameters are the same as those in Example 1; the proportion of the pressure uniformity region is 90.12%; the proportion of the pressure uniformity region in Example 1 is 1.16% higher than that in Comparative Example 1.

For the second set of data, in Example 1, the tiling area is 1,661,750 mm², the thickness is 110 mm, the C value is 15,000, the package length is 1,955 mm, the package width is 850 mm, F value is 2.3, the number of cells is 7, the thickness of the heat dissipation layer is 1mm, and the above parameters are all within the parameter range given in the above embodiments. The capacity of a single cell is 112.9Ah, the power of a single cell is 389.5Wh, the mass of a single cell is 1.126Kg, the energy density of the cell is 345.9Wh/Kg, and the proportion of the pressure uniformity region is 90.33%. In Comparative Example 2, the thickness is 170mm, which is not within the range of parameters given in the embodiments; the energy density is 318.2Wh/Kg; other parameters are the same as those in Example 2; the proportion of the pressure uniformity region is 88.43%; the proportion of the pressure uniformity region in Example 2 is 1.9% higher than that in Comparative Example 2.

For the third set of data, in Example 3, the tiling area is 1,267,500 mm², the thickness is 120 mm, the C value is 10,000, the package length is 1,950 mm, the package width is 650 mm, F value is 3, the number of cells is 10, the thickness of the heat dissipation layer is 2mm, and the above parameters are all within the parameter range given in the above embodiments. The capacity of a single cell is 86.2Ah, the power of a single cell is 297.4Wh, the mass of a single cell is 0.863Kg, the energy density of the cell is 344.6Wh/Kg, and the proportion of the pressure uniformity region is 97.43%. In Comparative Example 3, the thickness is 180mm, which is not within the range of parameters given in the embodiments; the energy density is 292.9Wh/Kg; other parameters are the same as those in Example 3; the proportion of the pressure uniformity region is 94.23%; the proportion of the pressure uniformity region in Example 3 is 3.2% higher than that in Comparative Example 3.

For the fourth set of data, in Example 4, the tiling area is 1,028,500 mm², the thickness is 130 mm, the C value is 8,000, the package length is 1,870 mm, the package width is 550 mm, F value is 3.4, the number of cells is 13, the thickness of the heat dissipation layer is 3mm, and the above parameters are all within the parameter range given in the above embodiments. The capacity of a single cell is 69.7Ah, the power of a single cell is 240.5Wh, the mass of a single cell is 0.704Kg, the energy density of the cell is 341.6Wh/Kg, and the proportion of the pressure uniformity region is 95.89%. In Comparative Example 1, the thickness is 160mm, which is not within the range of parameters given in the embodiments; the energy density is 300.6Wh/Kg; other parameters are the same as those in Example 4; the proportion of the pressure uniformity region is 93.77%; the proportion of the pressure uniformity region in Example 4 is 2.12% higher than that in Comparative Example 4.

For the fifth set of data, in Example 1, the tiling area is 1,500,000 mm², the thickness is 100 mm, the C value is 20,000, the package length is 1,500 mm, the package width is 1,000 mm, F value is 1.5, the number of cells is 5, the thickness of the heat dissipation layer is 0.5mm, and the above parameters are all within the parameter range given in the above embodiments. The capacity of a single cell is 101.8Ah, the power of a single cell is 351.2Wh, the mass of a single cell is 1.028Kg, the energy density of the cell is 341.6Wh/Kg, and the proportion of the pressure uniformity region is 91.28%. In Comparative Example 1, the thickness is 160mm, which is not within the range of parameters given in the embodiments; the energy density is 324.4Wh/Kg; other parameters are the same as those in Example 1; the proportion of the pressure uniformity region is 87.65%; the proportion of the pressure uniformity region in Example 5 is 2.46% higher than that in Comparative Example 5.

In summary, in the comparative examples, the thickness parameters are set outside the range of parameters proposed in the embodiments. It can be seen from the above data of the all-solid-state battery in each of example groups and comparative groups, the example groups have a relatively high proportion of pressure uniformity region, and in particular, the parameter of thickness has a relatively large impact on the proportion of the pressure uniformity region. When the thickness is set to a value outside the given range, the proportion of the pressure uniformity region decreases. Therefore, a solid-state battery that conforms to the data range proposed in the embodiments performs more prominently in terms of balancing pressure, thereby avoiding a decrease in the electrical performance of the battery after long-term use due to uneven pressure.

## Claims

1. An all-solid-state battery, comprising: a package (10), a cell assembly (20), a total positive electrode (30), and a total negative electrode (40); wherein the package (10) is sealedly wrapped around an outside of the cell assembly (20); the total positive electrode (30) and the total negative electrode (40) are connected to a peripheral side of the package (10) and electrically connected to the cell assembly (20);
a tiling area of the package (10) is A, a thickness of the package (10) is B mm, and C = A/B, where 5000 mm≤C≤20000 mm.

2. The all-solid-state battery according to claim 1, wherein 750,000mm²≤A≤2,000,000mm² and 100mm≤B≤150mm.

3. The all-solid-state battery according to claim 1, wherein a length of the package (10) is defined as D, a width of the package (10) is defined as E, and F=D/E, where 1.5≤F≤4.

4. The all-solid-state battery according to claim 3, wherein 1,500mm≤D≤2,000mm, and 500mm≤E≤1000mm.

5. The all-solid-state battery according to any one of claims 1-4, wherein the cell assembly (20) comprises N cells (21) arranged in a laminated configuration;
5≤N≤20; and/or
a heat dissipation layer (22) is arranged between each adjacent two of the N cells (21).

6. The all-solid-state battery according to claim 5, wherein a thickness of the heat dissipation layer (22) is G, and 0.5mm≤G≤5mm.

7. The all-solid-state battery according to claim 5, wherein the all-solid-state battery further comprises a total positive electrode (30) and a total negative electrode (40) that extend from a peripheral side of the package (10), and the N cells (21) are arranged in series; a positive electrode (23) of one of the N cells (21) is connected to the total positive electrode (30), and a negative electrode (24) of one of the N cells (21) is connected to the total negative electrode (40).

8. The all-solid-state battery according to claim 5, wherein each of the N cells (21) comprises:
a positive electrode assembly (211); and
a negative electrode assembly (213) and an electrolyte layer (212); wherein the negative electrode assembly (213) is disposed on each of both sides of the positive electrode assembly (211), and the electrolyte layer (212) is disposed between the positive electrode assembly (211) and the negative electrode assembly (213).

9. The all-solid-state battery according to claim 8, wherein the positive electrode assembly (211) comprises a positive electrode sheet (2111) and a positive electrode coating (2112); the positive electrode coating (2112) is coated on each of both sides of the positive electrode sheet (2111), and the electrolyte layer (212) is correspondingly superimposed on a side of the positive electrode coating (2112) away from the positive electrode sheet (2111); and/or
the negative electrode assembly (213) comprises a negative electrode coating (2132), a negative electrode sheet (2131), and an insulation layer (2133); the negative electrode coating (2132), the negative electrode coating (2132), and the insulation layer (2133) are successively stacked on a side of the electrolyte layer (212) away from the positive electrode coating (2112).

10. The all-solid-state battery according to any one of claims 1-4, wherein four flat side seal regions (11) are formed by sealing around the package (10), and the total positive electrode (30) and the total negative electrode (40) extend from opposite two of the four side seal regions (11), respectively.
